# EUROPÄISCHE PATENTSCHRIFT

(11) **EP 1 674 775 B1**
(45) Veröffentlichungstag und Bekanntmachung des Hinweises auf die Patenterteilung: **24.10.2007**
(21) Anmeldenummer: 06002789.3
(22) Anmeldetag: 12.03.2004
(51) Int. Cl.: F16K 27/00

(54) **Bausatz zur Bereitstellung von Stellgeräten**
Module for providing regulator devices
Module destiné à fournir dispositifs de réglage

(43) Veröffentlichungstag der Anmeldung: 28.06.2006
(62) Teilanmeldung aus: 04005982.6
(73) Patentinhaber: JCI REGELUNGSTECHNIK GmbH, 45143 Essen (DE)
(72) Erfinder: Rahn, Uwe H., 45145 Essen (DE); Obser, Michael, 76593 Gernsbach (DE); Schönwolff, Siegfried, 42579 Heiligenhaus (DE)
(74) Vertreter: Albrecht, Rainer Harald

(56) Entgegenhaltungen:
- DE-A1- 2 812 204
- DE-A1- 4 324 867
- US-A1- 2001 027 817

## Beschreibung

Die Erfindung betrifft ein Stellgerät für Rohrleitungen von Heizungs- und Klimaanlagen mit mindestens einem einen Ventilkörper aufweisenden Funktionselement.

Ein solches Stellgerät wurde in Dokument DE 4324867 offenbart.

Bekannte Stellgeräte beinhalten fest definierte, nachträglich nicht veränderbare Anschlüsse für die Montage an Rohrleitungen. Sowohl die Baulänge eines Stellgerätes (Face-to-face Abmessung) als auch die Ausführung der z. B. als Flansch ausgebildeten Anschlussverbindung bezüglich Flanschdicke, Flanschdurchmesser, Teilkreisdurchmesser für die verwendeten Verbindungsschrauben, Durchmesser und Längen der Schrauben etc., sind vorgegeben. Der Flanschanschluss zu den Rohrleitungen ist daher ein fester Bestandteil des Stellgerätes und kann nicht nachträglich geändert werden. Um die Stellgeräte auf unterschiedlichen, beispielsweise amerikanischen, europäischen und japanischen Märkten, anbieten zu können, benötigt man entsprechend separate Ventilbaureihen, um die jeweils gültigen Baulängen und Flanschabmessungen oder Gewindestandards abdecken zu können.

Der Erfindung liegt die Aufgabe zugrunde, ein Stellgerät für Rohrleitungen von Heizungs- und Klimaanlagen bereitzustellen, welches flexibel an unterschiedlichen Rohrleitungsstandards angepasst werden kann.

Die Aufgabe wird erfindungsgemäß gelöst durch die Merkmale des Anspruches 1.

Erfindungsgemäß wird zum Einbau in Rohrleitungssysteme unterschiedlicher Normen ein universelles Funktionselement verwendet, welches über die austauschbaren Endstücke an das Rohrleitungssystem angeschlossen wird. Die freien Anschlussenden der rohrförmigen Endstücke entsprechen der für die Rohrleitung jeweils geltenden Norm, wobei zusätzlich über die Länge der Endstücke auch eine Anpassung an genormte Baulängen des Rohrleitungssystems erfolgen kann. Entsprechend kann das Funktionselement selbst unabhängig von den für den Rohleitungsbau geltenden Normen gefertigt werden. Hierdurch ergeben sich beachtliche logistische Vorteile und Kostenvorteile, da die Anpassung des Stellgerätes an die jeweils geltende Rohrleitungsnorm ausschließlich über vergleichsweise einfach herstellbare Endstücke erfolgt. Die freien Anschlussenden und/oder die Länge der rohrförmigen Endstücke werden entsprechend der gewünschten Norm, z. B. DIN, EN, ANSI, ASTM, ISA, ISO etc. gestaltet, wobei die Fertigung und Montage der rohrförmigen Endstücke beispielsweise im Bestimmungsland erfolgen kann, während die vergleichsweise aufwendige Fertigung des Funktionselementes an einem zentralen Standort erfolgt, von dem aus verschiedene Märkte mit Funktionselementen beliefert werden. Je nach geltender Norm weisen die freien Anschlussenden der rohrförmigen Endstücke Flanschanschlüsse, Gewindeanschlüsse mit Innen- oder Außengewinden, Löt- oder Schweißanschlüsse auf.

Die Funktionselemente können zur Erfüllung unterschiedlicher Aufgaben, wie z. B. Verteilung, Regelung oder Absperrung eines Mediums, Durchgangsventile, Mischventile, Trennventile und Mehrwegventile umfassen, wobei die Montageflächen unabhängig von der Bauart identisch ausgebildet sind. Die Funktionselemente können mit unterschiedlichen Ventilkörpern, z. B. Küken, Ventilkugeln, Klappen, Ventilkegeln oder Schiebern bestückt sein und weisen vorzugsweise Gehäuse mit gleichen oder ähnlichen Abmessungen auf. Ein Austausch von Ventilen ist ohne aufwendige Arbeiten an den Rohrleitungen möglich, da keine Anpassung bezüglich der Baulänge des einzelnen Funktionselementes erforderlich ist.

Erfindungsgemäß sind zusätzliche Funktionselemente vorgesehen, die ein Gehäuse mit Strömungsein- und auslass sowie einen Strömungskanal mit einem gehäusefesten Strömungseinbau, z. B. in Form einer Messblende oder Drossel, aufweisen, wobei der Strömungseinlass und der Strömungsauslass von Gehäuseflächen umgeben sind, die den Montageflächen entsprechen. Die Funktionselemente können auch Druckregler, Rückstandsklappen, Wärmemengenzähler, Volumenstrombegrenzer und dergleichen umfassen. Hierdurch können zur Erfüllung komplexer Aufgaben mehrere Funktionselemente variabel hintereinander geschaltet werden.

Unter Verwendung des beschriebenen Bausatzes werden erfindungsgemäß Regelstrecken aus mehreren Funktionselementen gebildet.

Im Folgenden wird die Erfindung anhand einer lediglich ein Ausführungsbeispiel darstellenden Zeichnung ausführlich erläutert. Es zeigen schematisch:
- **Fig. 1a, 1b**: einen erfindungsgemäßen Bausatz im unmontierten bzw. montierten Zustand
- **Fig. 2a, 2b**: eine weitere Ausführungsform des erfindungsgemäßen Bausatzes und
- **Fig. 3**: einen Bausatz mit mehreren Funktionselementen im unmontierten Zustand.

Die Figuren zeigen einen Bausatz zur Bereitstellung von Stellgeräten für Rohrleitungen von Heizungs- und Klimaanlagen. Der Bausatz weist mindestens ein Funktionselement 1 auf, das ein Gehäuse 2 mit einem Strömungsein- und einem Strömungsauslass 3 sowie einen im Gehäuse 2 beweglich angeordneten, an der Gehäuseaußenseite betätigbaren Ventilkörper 4 aufweist. In den Ausführungsbeispielen sind die Funktionselemente 1 als Kugelventile ausgebildet und weisen drehbeweglich angeordnete kugelförmige Ventilkörper 4 auf.

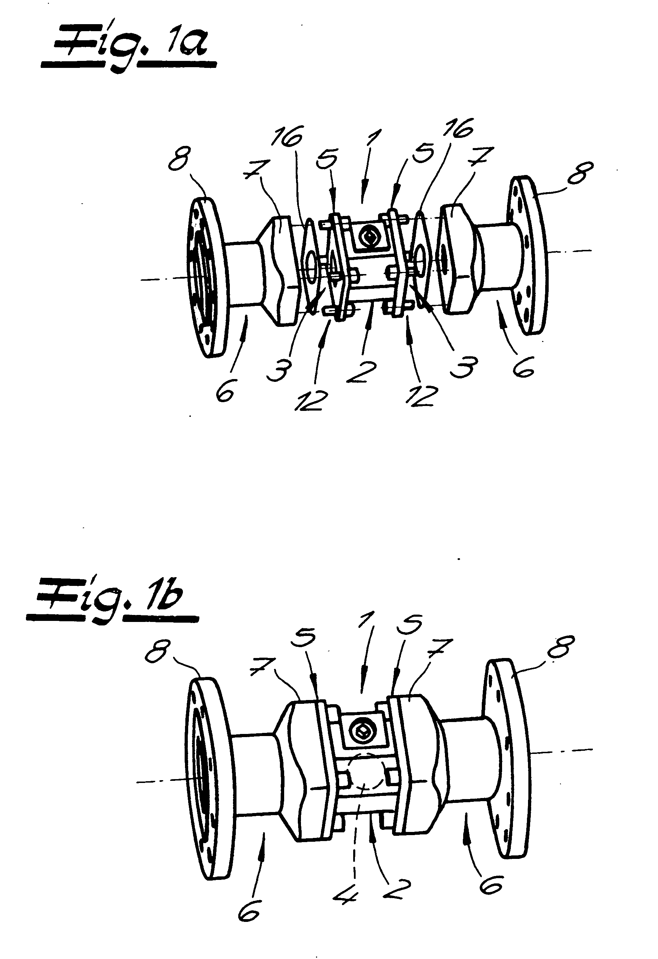

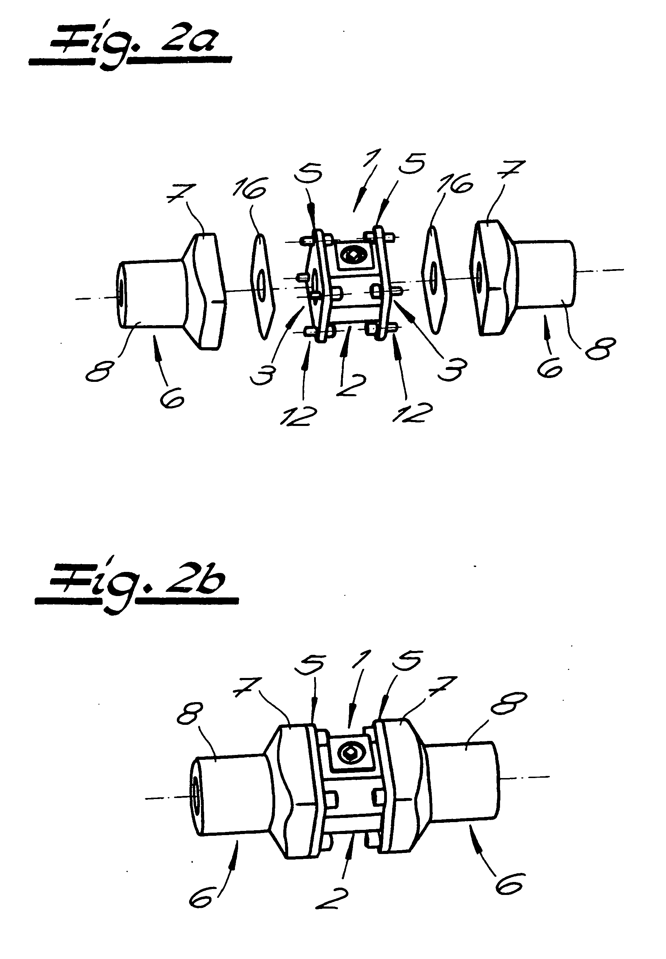

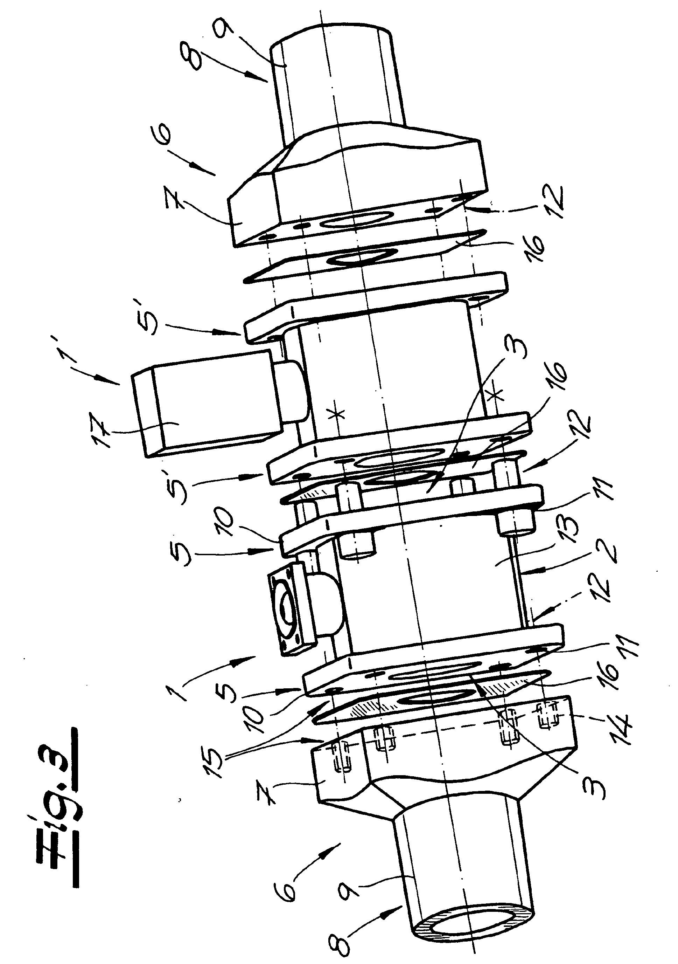

Die Strömungsein- und auslässe 3 sind von Montageflächen 5 umgeben. Der Bausatz weist ferner rohrförmige Endstücke 6 auf, die an einem Ende einen Anschlusskopf 7 zur Befestigung an den Montageflächen 5 des Gehäuses 2 aufweisen und mit einem freien Anschlussende 8 ausgebildet sind, das anwendungsbezogen entsprechend einer für die Rohrleitung geltenden Norm festgelegt ist. Während in den Fig. 1a und 1b die Anschlussenden 8 als Flansch ausgebildet sind, sind in den Fig. 2a und 2b die freien Anschlussenden 8 als einfaches Rohrstück ausgebildet, welches über eine Löt- oder Schweißverbindung in das Rohrleitungssystem integriert werden kann. In der Fig. 3 bestehen die freien Anschlussenden 8 aus einem mit einem Außengewinde 9 versehenen Rohrstück. Durch die unterschiedlichen Gestaltung der freien Anschlussenenden 8 kann das Funktionselement 1 universell in verschieden genormte Rohrleitungssystem integriert werden. Die rohrförmigen Endstücke 6 können an die jeweils durch eine Rohrleitungsnorm festgelegte Einbaulänge angepasst werden. Den Figuren ist ferner zu entnehmen, dass die Montageflächen 5 an den Strömungsein- und auslässen 3 identisch ausgebildet sind. Die Montageflächen 5 sind als Montageplatten ausgebildet, die umfangsseitig überstehen und in dem überstehenden Rand 10 Bohrungen 11 für Schraubverbindungen 12 enthalten. Das Gehäuse 2 weist einen quaderförmigen oder zylindrischen Grundkörper 13 auf, der den Ventilkörper 4 enthält, wobei die Montageplatten 5 an den Stirnflächen des Grundkörpers 13 angeschweißt oder angeformt sind.

Die Funktionselemente 1 können Durchgangsventile, Mischventile, Trennventile oder Mehrwegventile umfassen, wobei die Montageflächen 5 unabhängig von der Bauart identisch ausgebildet sind. Die Funktionselemente 1 können bei glichen Außenabmessungen des Gehäuses 2 mit unterschiedlichen Ventilkörpern bestückt sein.

Der Anschlusskopf 7 der rohrförmigen Endstücke 6 ist mit den Schraubverbindungen 12 an der Montagefläche 5 befestigt und enthält zur Befestigung Gewindesackbohrungen 14. Der Anschlusskopf 7 der Endstücke 6 und die Montagefläche 5 weisen Dichtflächen 15 für die Anordnung von Flachdichtungen 16 oder alternativ Rundschnurdichtungen auf.

Im Ausführungsbeispiel der Fig. 3 sind zwei Funktionselemente 1, 1' dargestellt, die unmittelbar miteinander verbunden sind. An den freien Montageflächen 5, 5' dieser Anordnung werden die rohrförmigen Endstücke 6 befestigt. Die Funktionselemente 1, 1' sind mit unterschiedlichen Ventilkörpern bestückt. Sie können beispielsweise ein Absperrventil mit einem Regelventil, dem ein Stellantrieb 17 zugeordnet ist, kombiniert werden. Ferner besteht die Möglichkeit, die Funktionselemente mit einem zusätzlichen Funktionselement zu kombinieren, das ein identisch ausgebildetes Gehäuse mit Strömungsein- und auslass sowie ein Strömungskanal mit einem gehäusefesten Strömungseinbau, z. B. in Form einer Messblende oder Drossel, aufweist. Das in Fig. 3 dargestellte Prinzip erlaubt die Bildung von kompakten Regelstrecken aus mehreren Funktionselementen, beispielsweise auch unter Einbeziehung eines Druckreglers, Rückstandsklappe, Wärmemengenzählers, Volumenstrombegrenzers und dergleichen.

## Patentansprüche

1. Verwendung eines Bausatzes bestehend aus:
a) mindestens einem Funktionselement (1), das ein Gehäuse (2) mit einem oder mehreren Strömungsein- und auslässen (3) sowie einen im Gehäuse (2) beweglich angeordneten und an der Gehäuseaußenseite betätigbaren Ventilkörper (4) aufweist, wobei die Strömungsein- und auslässe (3) von Montageflächen (5) umgeben sind;
b) mindestens einem weiteren Funktionselement (1'), das ein Gehäuse (2) mit einem oder mehreren Strömungsein- und auslässen und einem im Gehäuse (2) beweglich angeordneten und an der Gehäuseaußenseite betätigbaren Ventilkörper (4) oder einen gehäusefesten Strömungseinbau, z. B. in Form einer Messblende oder Drossel, aufweist, wobei die Strömungsein- und auslässe (3) ebenfalls von Montageflächen (5) umgeben sind;
c) rohrförmigen Endstücken (6), die an einem Ende einen Anschlusskopf (7) zur Befestigung an den Montageflächen (5) der Gehäuse (2) aufweisen und mit einem freien Anschlussende (8) ausgebildet sind,
zur Bildung von kompakten Regelstrecken aus mehreren Funktionselementen für den Einbau in Rohrleitungen von Heizungs- und Klimaanlagen, **dadurch gekennzeichnet, dass** sämtliche Funktionselemente (1, 1') universell zum Einbau in Rohrleitungssysteme unterschiedlicher Normen geeignet sind und unmittelbar miteinander verbunden werden, wobei für einen Anschluss an ein Rohrleitungssystem ausschließlich die rohrförmigen Endstücke (6) vorgesehen sind, die an den freien Montageflächen der Anordnung aus Funktionselementen (1, 1') befestigt werden und wobei das freie Anschlussende (8) der rohrförmigen Endstücke anwendungsbezogen entsprechend einer für das vorliegende Rohrleitungssystem geltenden Norm festgelegt wird.

2. Verwendung des Bausatzes nach Anspruch 1, **dadurch gekennzeichnet, dass** die Funktionselemente (1, 1') Durchgangsventile, Mischventile, Trennventile und Mehrwegventile umfassen, deren Montageflächen (5) unabhängig von der Bauart identisch ausgebildet sind.

3. Verwendung des Bausatzes nach Anspruch 1 oder 2, **dadurch gekennzeichnet, dass** die Funktionselemente (1, 1') bei gleichen Außenabmessungen des Gehäuses (2) mit unterschiedlichen Ventilkörpern (4) bestückt werden.

## Claims

1. Use of a kit consisting of:
a) at least one functional element (1) which has a housing (2) with one or more flow inlets and outlets (3) and a valve body (4) arranged movably in the housing (2) and capable of being actuated on the housing outer side, wherein the flow inlets and outlets (3) are surrounded by assembly surfaces (5);
b) at least one further functional element (1') which has a housing (2) with one or more flow inlets and outlets and a valve body (4) arranged movably in the housing (2) and capable of being actuated on the housing outer side, or a flow installation fixed to the housing, e.g. in the form of a measuring diaphragm or throttle, wherein the flow inlets and outlets (3) are likewise surrounded by assembly surfaces (5);
c) tubular end pieces (6) which at one end have a connecting head (7) for fixing to the assembly surfaces (5) of the housing (2) and are formed with a free connecting end (8),
for forming compact control sections consisting of several functional elements for installation in pipes of heating and air-conditioning systems, **characterised in that** all the functional elements (1, 1') are universally suitable for installation in pipe systems according to different standards and are directly connected to one another, wherein only the tubular end pieces (6) are provided for connection to a pipe system, said tubular end pieces being fixed to the free assembly surfaces of the arrangement consisting of functional elements (1, 1'), and wherein the free connecting end (8) of the tubular end pieces is defined with specific reference to the application according to a standard applicable to the existing pipe system.

2. Use of the kit according to claim 1, **characterised in that** the functional elements (1, 1') comprise through-valves, mixing valves, separating valves and multi-way valves, the assembly surfaces (5) of which are formed identically regardless of the type.

3. Use of the kit according to claim 1 or 2, **characterised in that** the functional elements (1,1') are equipped with different valve bodies (4) with the same external dimensions of the housing (2).

## Revendications

1. Utilisation d'un module constitué :
a) d'au moins un élément fonctionnel (1), comprenant un carter (2) avec une ou plusieurs admissions et sorties d'écoulement (3) ainsi qu'un corps de vanne (4), monté mobile dans le carter (2) et actionnable sur le côté extérieur de ce dernier, les admissions et sorties d'écoulement (3) étant entourées par des surfaces de montage (5) ;
b) d'au moins un autre élément fonctionnel (1'), comprenant un carter (2) avec une ou plusieurs admissions et sorties d'écoulement et un corps de vanne (4), monté mobile dans le carter (2) et actionnable sur le côté extérieur de ce dernier, ou un insert d'écoulement solidaire du carter, par exemple en forme d'un orifice de mesure ou étranglement, les admissions et sorties d'écoulement (3) étant également entourées par des surfaces de montage (5) ;
c) d'embouts tubulaires (6), comprenant sur une extrémité une tête de raccordement (7) pour la fixation sur les surfaces de montage (5) du carter (2) et sont réalisés avec une extrémité de raccordement libre (8),
le module étant destiné à la formation de systèmes asservis compacts constitués de plusieurs éléments fonctionnels pour le montage dans des tuyauteries d'installations de chauffage et de climatisation, **caractérisée en ce que** tous les éléments fonctionnels (1, 1') se prêtent universellement au montage dans des réseaux de tuyauteries de normes différentes et sont assemblés directement entre eux, les embouts tubulaires (6), qui sont fixés sur les surfaces de montage libres de l'agencement d'éléments fonctionnels (1, 1'), étant exclusivement prévus pour un raccordement à un réseau de tuyauteries, et l'extrémité de raccordement (8) des embouts tubulaires étant définie, en adaptation à une application, selon une norme en vigueur pour le réseau de tuyauteries disponible.

2. Utilisation du module suivant la revendication 1, **caractérisée en ce que** les éléments fonctionnels (1, 1') comprennent des robinets à passage direct, des robinets mitigeurs, des vannes de séparation et des distributeurs, dont les surfaces de montage (5) ont une configuration identique indépendamment du type de construction.

3. Utilisation du module suivant l'une quelconque des revendications 1 et 2, **caractérisée en ce que** les éléments fonctionnels (1, 1') sont équipés de corps de vannes (4) différents pour des dimensions extérieures égales du carter (2).
